# DEMANDE DE BREVET EUROPEEN

(11) **EP 1 119 201 A2**
(43) Date de publication de la demande: **25.07.2001**
(21) Numéro de dépôt: 01400168.9
(22) Date de dépôt: 19.01.2001
(51) Int. Cl.: H04N 7/24

(54) **Procédé et dispositif de distribution de signaux de paramètres de réglage à un décodeur**

(30) Priorité: 19.01.2000 FR 0000652
(71) Demandeur: SAGEM S.A., 75116 Paris (FR)
(72) Inventeur: Torche, Fabien, 95800 Cergy Saint Christophe (FR)
(74) Mandataire: Schmit, Christian Norbert Marie

(57) **Abrégé**

Pour résoudre un problème d'acquisition des tables de réglage ou de tables d'information (comme pour la publicité) des décodeurs dans le cadre de la télévision numérique, on prévoit de constituer un site de téléchargement de ces tables et d'envoyer l'ensemble des tables aux utilisateurs par l'intermédiaire d'un canal spécifique. On montre qu'en agissant ainsi on réduit pour les utilisateurs le temps de balayage et on leur met une information adaptée plus rapidement à disposition. Le canal spécifique peut être un modem contenu dans le décodeur et en relation avec le serveur de téléchargement par l'intermédiaire du réseau Internet. Il peut être également un canal spécifique institué dans le flux, comme un service supplémentaire.

## Description

La présente invention a pour objet un procédé et un dispositif de distribution, à un décodeur de télévision, de signaux de paramètres de réglage ou d'informations de plusieurs services dans ce décodeur de télévision. L'invention est plus particulièrement destinée à la télévision dite numérique, que des signaux pour celle-ci soient transmis par un câble (dans des bandes de fréquence de 170 à 862 MHz), par un satellite (dans des bandes de fréquence à l'émission de 10,3 à 12,8 GHz), ou par voie terrestre (dans des bandes de 17 à 862 MHz). Le but de l'invention est de simplifier la reconstruction par un décodeur des tables de paramètres qui permettent son réglage.

Typiquement un récepteur de télévision numérique comporte un décodeur relié par ailleurs à un dispositif de visualisation. Le décodeur comporte des moyens de réception pour recevoir les signaux émis et des moyens de formatage pour transformer les signaux reçus en des signaux applicables directement sur les organes de commande du dispositif de visualisation. Pour un tube cathodique il s'agit par exemple des commandes appliquées sur les organes de balayage et sur les différents canons à électrons produisant des pixels de couleur sur l'écran.

Le formatage se réalise en respectant pour chacune des images à représenter des tables de paramètres. On distingue les tables dites SI, System Information - Information Système - qui dans la norme DVB, représente un titre d'un programme diffusé, une heure de début, une heure de fin, ainsi que différentes caractéristiques. Le contenu des tables SI intéresse particulièrement l'utilisateur car elles conduisent à afficher des informations qui permettent à l'utilisateur de choisir le programme qu'il veut visualiser. D'autres tables dites PSI Program Specific Information - Information Spécifique de Programme - décrite dans la norme MPEG sont des tables fonctionnelles d'identification de paquets vidéo audio ou de données. Elles représentent en définitive le protocole de transmission et l'architecture des paquets numériques transmis ainsi que leur signification. Les tables PSI servent à afficher les images d'un programme visualisé.

Dans la télévision numérique, il est prévu que les signaux de paramètre soient transmis dans le flux (c'est à dire avec le signal vidéo lui-même) dans des paquets de données. Les paquets de données transmis sont arrangés en sections, les sections comportant classiquement 1024 octets et dans certains cas 4096 octets. Les paquets d'une même table ne sont pas nécessairement groupés dans une même section. Ils peuvent être répartis dans des sections successives, entrelacées avec des paquets d'informations relatifs à d'autres tables ou au signal vidéo, audio, de données ou autre. Dans chaque section, des identifiants permettent d'attribuer les paquets de données à des tables particulières parmi d'autres. En réception, un décodeur ne sait pas à priori comment sont répartis les paquets de données mais il connaît le découpage des sections. Le décodeur doit donc lire l'identifiant dans chaque section et réorganiser les données pour les affecter aux bonnes tables. Toutes les tables sont éditées par les opérateurs de télévision ou les gestionnaires de média de transport, sont incorporées dans le flux de cet opérateur, et sont acheminées vers les utilisateurs par les différents médias.

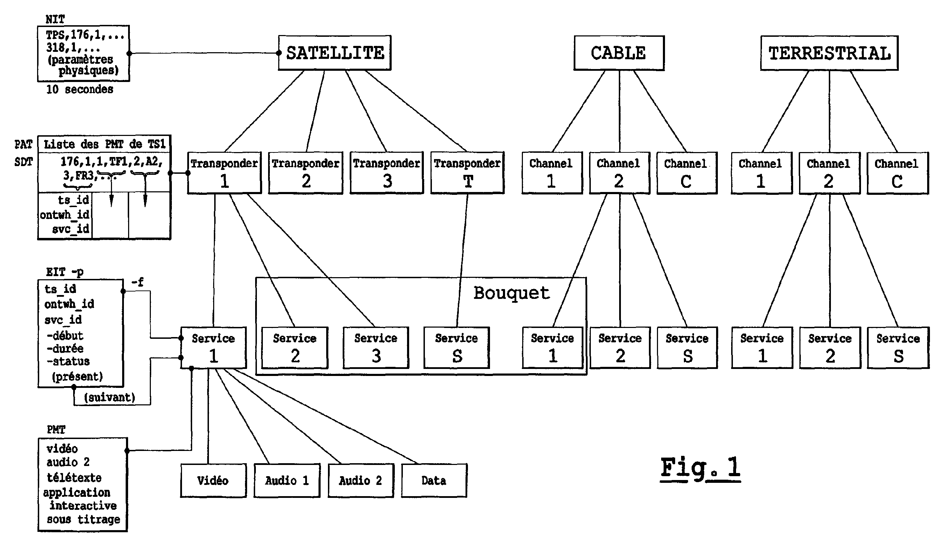

La figure 1 montre une représentation des différents médias de transmission. Elle permet par ailleurs de figer le vocabulaire utilisé dans le domaine. Des moyens d'émission réception comportant des satellites, des câbles ou des dispositifs de rediffusion terrestre constituent des réseaux de transmission. Pour chaque média de transmission il existe une table NIT, Network Information Table - Table d'Information de Réseau, qui indique le nom du réseau, le numéro du réseau, et pour chacun des multiplexes du réseau, des transpondeurs quand il s'agit de liaison par satellite, des informations telles que fréquence de modulation, position orbitale de bits, polarisation etc... Des informations similaires sont contenues dans les tables NIT des médias de transmission câble ou terrestre.

Les informations contenues dans les tables NIT sont des paramètres physiques permettant essentiellement à un décodeur de se caler en fréquence pour capter chaque multiplexe. Chaque table NIT comporte, pour un transpondeur désigné, une liste de services véhiculés par le transpondeur. Cette liste est normalement limitée, quelquefois à 8 services, du fait de la limitation de bande passante réservée pour un transpondeur. Par service on entend classiquement ce que les utilisateurs appellent une chaîne de télévision, par exemple une chaîne diffusant au cours de la journée des programmes successifs les uns aux autres. Néanmoins les services peuvent être des services uniquement audio ou des services de données ou autres.

Chaque service est ainsi identifié dans la table NIT par un triplet représentant une information dite Original Network Id (ontwk_id) - Identification de réseau origine, pour fixer les idées par la suite on prendra comme réseau origine le réseau dont le numéro est 176 (arbitrairement). Un service est encore identifié par l'information Transport Stream Id (ts_id) - Identification de multiplex, typiquement cette information désigne un des transpondeurs en relation avec le satellite. Enfin le service va être identifié par une information dite Service Id (svc_id) - Identification de Service, qui sera en pratique un numéro attribué par un opérateur qui gère le satellite à la transmission de ce service. Dans le message correspondant à la table NIT le décodeur récupère essentiellement le triplet selon la norme DVB ainsi que les paramètres physiques (PSI) du transpondeur.

Chaque transpondeur émet une table SDT qui comporte des sous-tables. Chaque sous-table décrit chacun des services qui sont véhiculés par le transpondeur. Ces services peuvent faire partie des services distribués par un transpondeur ou par un autre transpondeur. Ceci est identifié à partir de la table NIT.

En définitive toute une architecture de tables est ainsi distribuée, en particulier selon la norme EN 300 468 V1.3.1 et le but du décodeur est de reconstruire toutes les tables pour disposer des informations de réglage ainsi que des informations à montrer en visualisation pour les utilisateurs.

En ce qui concerne les transpondeurs, chacun diffuse en outre une table dite PAT, Program Association - Table des programmes associés, table qui elle-même donne la liste des tables PMT, Program Map Table - Table des composants des programmes, qui sont associées à chacun des services.

Au niveau des services, on trouvera des tables dites EIT Event Information Table - Table d'événements, et des tables PMT. Les tables EIT se réfèrent à chaque service, à partir de son triplet d'identification selon la norme DVB, et indiquent pour ce service l'heure de début, la durée ou l'heure de fin, le statut, ainsi que d'autres informations relatives à un progamme diffusé. Les tables EIT sont par ailleurs dédoublées en EITp et ElTf pour représenter une table correspondant à l'instant présent (p), et ainsi qu'une autre table correspondant à un instant suivant (f, following). Les deux tables EITp et EITf sont de même structure mais possèdent chacune un identifiant renseignant sur leur qualité.

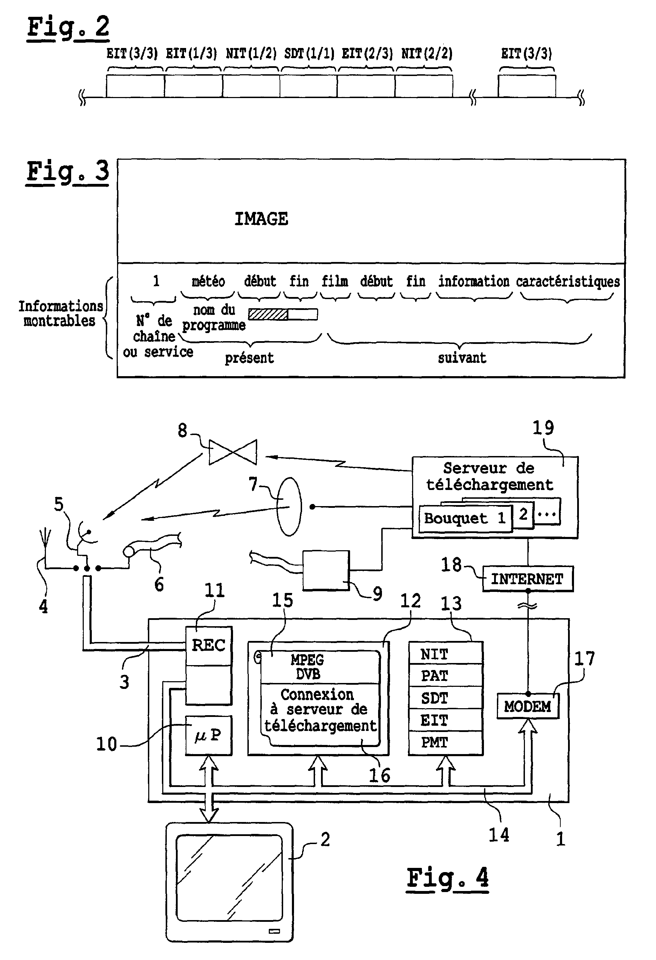

En pratique, dans le flux des sections de paquets, figure 2, les tables NIT, SDT et EIT sont transmises par parties imbriquées dans le temps selon les normes. Elles possèdent des identifiants dans le flux égaux respectivement à 0x0010, 0x0011, et 0x0012 complétés par l'information ts_id.

La figure 3 montre typiquement une image diffusée sur un dispositif de visualisation recevant des signaux selon ce qui a été décrit ci-dessus. L'image visualisée peut être complétée par des informations montrables concernant le numéro de la chaîne ou en pratique du service, le nom du programme, ainsi que son heure de début et son heure de fin. Cette dernière indication peut par ailleurs être remplacées par un index fluctuant dans le temps montrant d'une manière intuitive le temps déjà écoulé pour le programme et le temps restant à diffuser. Par ailleurs, ces informations montrables comportent les indications correspondant à un programme suivant avec, encore une fois, le nom du programme, l'heure de début, l'heure de fin ainsi que diverses informations (titre d'un film, nom des acteurs) et des caractéristiques, présence d'un carré blanc ou autre. Les informations montrables ne sont pas systématiquement juxtaposées à côté de l'image. Elles peuvent être affichées par l'utilisateur en appuyant sur une touche particulière de sa télécommande.

La norme MPEG2 permet de multiplexer plusieurs programmes dans un même Transport Stream (TS) ou canal. Cette norme est complétée par la norme DVB qui permet la constitution et le zapping sur plusieurs transpondeurs au sein d'un même et unique réseau. Les programmes sont repérés par un triplet (ontwk_id, ts_id, et svc_id). Chaque opérateur diffuse donc une signalisation plus ou moins complète permettant la constitution d'une liste de services accessibles à partir d'une connexion unique sur un transpondeur. Dans ce cadre, les paramètres de connexion sont soit saisis par l'utilisateur, à l'écran, soit figés dans le décodeur. Afin de permettre à un utilisateur de récupérer une liste complète de tous les services diffusés sur tous les réseaux et quels que soient les opérateurs, un balayage (dit aussi scanning) a été mis en place. Il se traduit par une succession de visites de transpondeurs permettant de récupérer des services de plusieurs réseaux, et non plus par une installation unique. Le principe du balayage est le suivant. On analyse une plage de fréquence avec les différents paramètres associés (débit, symbole etc...). Pour trouver tous les pics de fréquence accessibles. Sur chacun des pics on récupère la liste de services diffusés par les opérateurs. On analyse ensuite les tables SI sensées décrire une liste de services à l'aide des descripteurs selon la norme DVB. On analyse ensuite les tables PSI qui permettent d'élaborer des listes de services sans que l'opérateur ait besoin de les décrire dans les tables SI.

Le problème à résoudre avec la présente invention est celui de pouvoir afficher en temps réel, notamment lorsqu'un utilisateur zappe avec sa télécommande, des informations montrables correspondant au nouveau programme qu'il regarde, même si celui-ci est diffusé par un autre transpondeur, voire un autre réseau.

Dans l'état de la technique, pour disposer de ces informations montrables et autres, il est prévu de faire balayer par le décodeur toutes les possibilités en fréquence et de recevoir, de traiter et de stocker toutes les tables transmises. En pratique, il n'est demandé à l'utilisateur que de désigner un satellite, par exemple INTELSAT, et éventuellement de se limiter à une plage plus petite d'exploration en fréquence, puis de laisser le décodeur effectuer le balayage, recevoir toutes les chaînes et acquérir toutes les informations utiles.

Cette manière de faire présente plusieurs inconvénients. Premièrement le balayage est lent, il peut durer de l'ordre de 20 minutes s'il y a beaucoup de services (de chaînes de télévision distribuées et captables). On peut difficilement demander à l'utilisateur de patienter une telle durée. L'expérience montre par ailleurs que les utilisateurs ne le provoquent pas. Autre inconvénient, l'utilisateur reçoit ainsi de nombreuses informations dont pour une grande part il n'a que faire. En pratique, les informations qu'il reçoit sont le fait de l'opérateur et l'utilisateur n'a pas la possibilité d'écarter les informations inutiles notamment dans le but de gagner du temps pour l'acquisition. Notamment si beaucoup de services sont disponibles à partir d'un transpondeur le décodeur devra acquérir toutes les tables EIT present, EIT following ainsi que les tables PMT pour tous ses programmes. Toutes ces tables occupent alors beaucoup de place en mémoire.

Selon l'invention, ce problème est résolu en remplaçant le mode de distribution des informations des programmes, contenus dans le flux selon la norme précitée, en une distribution spécialisée fournie par un fournisseur (éventuellement un opérateur) spécifique, et distribuée selon un canal spécifique. Le canal spécifique utilisé pourra être dans un exemple un canal téléphonique. Dans ce cas, on munit le décodeur d'un modem. Ou bien le canal spécifique sera un canal réservé dans le canal câblé ou dans le canal radioélectrique terrestre ou satellitaire. Ces derniers modes permettent une simplification du paramétrage des décodeurs. Il suffirait en effet que ceux-ci se connectent à ce canal spécifique. A une heure prévue à l'avance, un serveur de paramètres diffuserait les informations utiles aux décodeurs. Tous les décodeurs qui captent le flux pourraient sélectionner ce canal spécifique, à cette heure prévue, et rentrer directement toutes les informations des programmes nécessaires.

L'invention a donc pour objet un procédé de distribution, à un décodeur de télévision, de signaux de paramètres de réglage de la réception de plusieurs services dans ce décodeur de télévision, caractérisé en ce qu'il comporte
- une collecte de signaux de paramètre pour plusieurs services, et
- un téléchargement dans le décodeur de télévision des signaux ainsi collectés par l'intermédiaire d'un canal spécifique.

Elle a également pour objet un décodeur de télévision comportant une mémoire de paramètres de réglage de la réception de plusieurs services, caractérisé en ce qu'il comporte un moyen de se connecter à un canal spécifique de transmission et un moyen de téléchargement de signaux de paramètre collectés pour plusieurs services de télévision.

Elle a enfin pour objet un serveur de téléchargement comportant des moyens pour collecter des signaux de paramètre pour plusieurs services, et des moyens pour télécharger dans un décodeur de télévision des signaux ainsi collectés. Il peut donc s'agir d'une liste de programmes comme de toute autre information utile pour faire de la télévision numérique.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figures 1 à 3 des figures déjà commentées montrant l'architecture de distribution des informations à acquérir par les décodeurs ;
- Figure 4 une représentation schématique du procédé et du décodeur selon l'invention.

La figure 4 montre un décodeur 1 selon l'invention. Le décodeur 1 est en relation avec un dispositif de visualisation 2 pour afficher sur l'écran de ce dispositif de visualisation des programmes radiodiffusés reçus sur une entrée 3 du décodeur. D'une manière connue l'entrée 3 peut être reliée à une antenne terrestre 4, une antenne satellite 5, ou à un câble de télédistribution 6. L'antenne terrestre 4 est en relation radio électrique avec un centre 7 de rediffusion, l'antenne 5 est en relation avec un satellite 8, le câble 6 est relié à un circuit 9 de diffusion d'un opérateur de télévision. L'opérateur 9 peut être par ailleurs celui qui transmet au circuit de rediffusion 7 et au satellite 8 les informations que ces derniers ont à diffuser.

Le décodeur 1 comporte dans son principe un microprocesseur 10 en relation avec des circuits de réception 11 reliés à l'entrée 3. Le microprocesseur 10 est relié au récepteur 11 ainsi qu'à une mémoire programme 12 et à une mémoire de données 13 par l'intermédiaire d'un bus 14. Le bus 14 peut par ailleurs être utilisé pour transmettre au dispositif de visualisation 2 les images à afficher. D'une manière connue la mémoire programme 12 comporte un programme 15 intitulé MPEG-DVB apte à mettre en oeuvre une opération de balayage et de détection des paramètres de réglage dans le flux reçu sur l'entrée 3 pour régler le décodeur 1. Ces paramètres sont mémorisés dans la table 13 au moment de leur décodage.

Dans l'invention pour résoudre les problèmes inhérents au balayage, on prévoit de munir la mémoire programme 12 d'un programme complémentaire 16 de connexion à un serveur de téléchargement et de mémorisation dans la mémoire 13 des informations ainsi collectées. Par exemple le programme 16 peut comporter la mise en oeuvre d'un modem 17 lui aussi relié au bus 14 et qui peut entrer en relation, à la demande du microprocesseur 10, en exécution du programme 16, notamment par l'intermédiaire du réseau Internet 18, avec un serveur de téléchargement 19. En agissant ainsi, le chargement de la mémoire 13 se réalise par un canal spécifique, indépendant du flux normal (selon la norme) des images diffusées par les circuits 7, 8 ou 9. La mise à jour d'une mémoire 13 par une connexion au réseau Internet et prélèvement dans un serveur 19 est parfaitement connue et ne nécessite pas d'être plus amplement décrite.

Il est par ailleurs possible de créer, à partir des organes de diffusion 7, 8 et 9 eux-mêmes, un canal spécifique de téléchargement. Dans ce cas ce canal spécifique peut s'apparenter à un service (voir figure 1) associé à un mode de transmission de données d'une part et à un mode d'exécution d'un programme de mise à jour de la mémoire 13 d'autre part. Il est ainsi possible que toutes les nuits, ou à un instant programmé de façon régulière, à l'endroit où se trouve le décodeur 1, le microprocesseur 10 en application du programme 16 effectue une opération de changement de canal pour se connecter au canal spécifique retenu (au service concerné), prélever les informations téléchargées et mettre à jour toutes les tables citées ci-dessus. De ce point de vue, la différence entre le programme 15 et le programme 16 est que, pour ce dernier, la reconstruction des tables est plus rapide, puisque chaque table peut alors être envoyée dans le canal spécifique selon un protocole correspondant bien à sa mémorisation directe dans la mémoire 13.

En agissant ainsi il est par ailleurs possible de sélectionner, de trier, dans le serveur de téléchargement 19, un jeu de tables plutôt qu'un autre. Ce jeu de tables correspondra alors à un bouquet, comme montré sur la figure 1, de sorte que l'utilisateur pourra accéder rapidement à toutes les informations qui l'intéressent sans avoir à recevoir celles qui ne l'intéressaient pas. En effet, en regardant la figure 1, on constate que pour disposer des informations d'un bouquet le décodeur de l'utilisateur devait explorer le transpondeur 1 ainsi que le transpondeur T sur le réseau satellitaire, de même que le canal 2 sur le câble. Si les tables correspondant au bouquet sont groupées dans le serveur 19 de téléchargement, le programme 16 peut par ailleurs comporter un envoi au serveur 19 d'une requête spécifique désignant un bouquet, pour recevoir les tables du bouquet. Ou bien, en cas de diffusion des tables du serveur 19 par les circuits 7 à 9, le décodeur peut opérer une sélection d'un canal spécifique parmi plusieurs canaux spécifiques dans lequel un bouquet de tables recherchées est diffusé. Ou encore, sur un même canal de diffusion spécifique, le décodeur peut n'accepter que les tables (groupées de préférence) correspondant à un bouquet ou à une fenêtre temporelle.

Dans l'invention plutôt que de laisser la charge du balayage à l'utilisateur, on propose de lui offrir un service en ligne de balayage, de constitution de listes de services de télévision, et le téléchargement de son décodeur de façon transparente pour l'utilisateur. Ceci est réalisé grâce au serveur de téléchargement 19 qui de préférence effectue un balayage permanent, sans cesse recommencé de tous les services diffusés quels que soient les moyens de diffusion de façon à disposer en permanence d'une liste parfaitement à jour. En variante le serveur de téléchargement 19 reçoit les informations des différents opérateurs 9 pour combiner les tables, notamment celles des bouquets.

Le serveur 19 est ainsi en relation avec les circuits de ces opérateurs de deux manières. Dans une première manière il est en relation soit pour recevoir d'eux comme un décodeur normal tous les signaux et les analyser par balayage, soit pour recevoir d'eux des tables selon un format spécifique. Dans une deuxième manière, il est en relation avec les circuits de ces opérateurs pour transmettre à ces opérateurs et pour que ceux-ci le diffusent sur un canal spécifique, les tables déjà constituées.

La liste intégrale des services est entretenue en temps réel par le serveur 19 et celui-ci constitue une base de données téléchargeable, notamment à la demande de l'utilisateur. La durée de téléchargement est de loin inférieure à la durée de balayage. De préférence le téléchargement est effectué la nuit à l'endroit du décodeur de télévision, ou encore mieux lorsque le décodeur est mis en veille par l'utilisateur. En effet au moment de la mise en veille, ou par exemple 10 minutes après celle-ci, on peut estimer que l'utilisateur a abandonné l'utilisation de son décodeur et que celui-ci peut lancer une procédure de téléchargement. De préférence cette procédure de téléchargement est interrompue si le décodeur est de nouveau sollicité pour une utilisation.

Bien entendu la table 13 mise à jour est utilisée telle quelle pour paramétrer le décodeur avec les signaux de paramètres téléchargés. En effet, ceux-ci occupent la place allouée aux signaux reçus par le flux lorsque l'utilisateur zappe, change de service (de chaîne). De préférence, au moment de ce changement on peut prévoir de vérifier que les tables transportées par le flux sont conformes aux tables stockées dans la mémoire 13. Si ce n'est pas le cas, on change les valeurs contenues dans la mémoire 13 par des valeurs prélevées dans le flux.

## Revendications

1. Procédé de distribution, à un décodeur de télévision, de signaux de paramètres de réglage de la réception de plusieurs services dans ce décodeur de télévision, caractérisé en ce qu'il comporte
- une collecte de ces signaux de paramètre de réglage de la réception de plusieurs services provenant de plusieurs transpondeurs, et
- un téléchargement dans le décodeur de télévision des signaux ainsi collectés par l'intermédiaire d'un canal spécifique.

2. Procédé selon la revendication 1, caractérisé en ce que
- le téléchargement est réalisé par un canal téléphonique.

3. Procédé selon l'une des revendications 1 à 2, caractérisé en ce que
- le téléchargement est réalisé par un canal câblé.

4. Procédé selon l'une des revendications 1 à 4, caractérisé en ce que
- le téléchargement est réalisé par un canal spécifique radioélectrique.

5. Procédé selon l'une des revendications 1 à 4, caractérisé en ce que
- la collecte et ou le téléchargement comportent un tri des signaux de paramètre.

6. Procédé selon l'une des revendications 1 à 5, caractérisé en ce que
- le téléchargement est réalisé lors d'une veille du décodeur de télévision.

7. Procédé selon l'une des revendications 1 à 5, caractérisé en ce que
- le téléchargement est réalisé la nuit, ou à un instant programmé de façon régulière, à l'endroit du décodeur de télévision.

8. Décodeur de télévision comportant une mémoire de paramètres de réglage de la réception de plusieurs services, caractérisé en ce qu'il comporte un moyen (17) de se connecter à un canal (18) spécifique de transmission et un moyen (16) de téléchargement de signaux de paramètre de réglage collectés pour la réception de plusieurs services provenant de plusieurs transpondeurs.

9. Décodeur selon la revendication 8, caractérisé en ce qu'il comporte un modem

10. Serveur (19) de téléchargement comportant des moyens pour collecter des signaux de paramètre de réglage de la réception de plusieurs services provenant de plusieurs transpondeurs, et des moyens (7-9, 18) pour télécharger dans un décodeur de télévision des signaux ainsi collectés.

11. Serveur selon la revendication 10, caractérisé en ce qu'il comporte des moyens de rassembler des signaux de paramètre correspondant à un bouquet.
